# EUROPEAN PATENT SPECIFICATION

(11) **EP 4 059 688 B1**
(45) Date of publication and mention of the grant of the patent: **22.01.2025**
(21) Application number: 20927548.6
(22) Date of filing: 23.03.2020
(51) Int. Cl.: B29C 39/42, B29C 70/44, B29C 70/48, B29C 70/54, B29C 33/46

(54) **FIBER-REINFORCED COMPOSITE FORMING METHOD AND FIBER-REINFORCED COMPOSITE FORMING APPARATUS**
VERFAHREN ZUR HERSTELLUNG EINES FASERVERSTÄRKTEN VERBUNDSTOFFS UND VORRICHTUNG ZUR HERSTELLUNG EINES FASERVERSTÄRKTEN VERBUNDSTOFFS
PROCÉDÉ DE MISE EN FORME DE COMPOSITE RENFORCÉ PAR DES FIBRES ET APPAREIL DE FORMATION DE COMPOSITE RENFORCÉ PAR DES FIBRES

(43) Date of publication of application: 21.09.2022
(73) Proprietor: Mitsubishi Heavy Industries, Ltd., Tokyo 100-8332 (JP)
(72) Inventor: SHIMONO, Kodai, Tokyo 100-8332 (JP); TOKUTOMI, Hiroshi, Tokyo 100-8332 (JP); SHINDO, Kentaro, Tokyo 100-8332 (JP); FUJITA, Takeshi, Tokyo 100-8332 (JP)
(74) Representative: Hoffmann Eitle
(86) International application number: PCT/JP2020/012718
(87) International publication number: WO 2021/191967

(56) References cited:
- EP-A1- 1 134 069
- EP-A2- 3 398 759
- WO-A1-00/18566
- WO-A1-98/51481
- WO-A1-98/51481
- JP-A- 2015 142 993
- JP-A- 2019 077 115
- US-A- 3 764 641
- US-A1- 2004 079 838
- US-A1- 2010 139 857
- US-A1- 2012 119 405
- US-A1- 2015 298 364
- US-A1- 2015 298 364
- US-A1- 2016 107 338

## Description

### Technical Field

The present disclosure relates to a fiber-reinforced composite forming method and a fiber-reinforced composite forming apparatus.

### Background Art

In the related art, a fiber-reinforced composite such as a fiber-reinforced plastic in which a resin is reinforced with a fiber base material such as a glass fiber or a carbon fiber is known (for example, refer to JP 2019-77115 A). JP 2019-77115 A discloses a forming method for the fiber-reinforced composite to which vacuum assisted resin transfer molding (VaRTM) for infiltrating the resin into the fiber base material by using a differential pressure between a vacuum pressure and an atmospheric pressure is applied. PTL 1 discloses the followings. A core is installed in a hollow part when a composite having a hollow structure is formed, and the core is pulled out from the hollow part after the composite is formed.

EP 1 134 069 A1 discloses a hollow structure of fiber-reinforced resin and a method of manufacturing such hollow structure. An inner mould is positioned on a stand. Substrate comprising reinforcing fiber is arranged at the surface of the mould. Next, the top of the substrate is covered with a bag and the interior pressure of the bag is reduced to below atmosphere pressure. Then, synthetic resin is injected into the reinforcing fiber.

US 2012/0119405 A1 describes a method for producing a composite fiber component and a device for carrying out such method. First, a filter panel comprising a porous material is provided. In subsequent steps, a resin soaked fiber material is arranged on the filter panel, the fiber material on the filter panel is covered, and a negative pressure is generated at a side of the filter panel that faces away from the filter material.

US2025/298364 A1, US 2010/139857 A1 and EP 3 398 759 A2 describe a fiber-reinforced composite forming method and apparatus which represent the closest prior art.

### Summary of Invention

### Technical Problem

According to the forming method disclosed in JP 2019-77115 A, a cylindrical or rod-shaped rigid reinforcing jig is inserted into the core to maintain a shape holding function of the core. However, when the core is installed in the hollow part of the composite, it is necessary to carry out work for inserting the reinforcing jig into the core.

In addition, when the core is pulled out after the composite is formed, it is necessary to carry out work for pulling out the reinforcing jig from the core, and thereafter, bending a portion thinner than other parts of the core. In this way, according to the forming method disclosed in JP 2019-77115 A, it is necessary to provide the reinforcing jig, and it is necessary to carry out complicated work such as the work for inserting the reinforcing jig, the work for pulling out the reinforcing jig, and the work for bending the core.

The present disclosure is made in view of the above-described circumstances, and an object of the present disclosure is to provide a fiber-reinforced composite forming method and fiber-reinforced composite forming apparatus which can form a fiber-reinforced composite including a hollow part without requiring complicated work.

### Solution to Problem

This object is solved by a fiber-reinforced composite forming method with the features of claim 1 and a fiber-reinforced composite forming apparatus with the features of claim 6. Preferred embodiments follow from the other claims.
According to an aspect of the present disclosure, there is provided a fiber-reinforced composite forming method including an alignment step of aligning a fiber base material in which a core part including an elastic long foam and a cover member for sealing the foam is accommodated in a hollow part, in a forming die, a sealing step of sealing the fiber base material in the forming die to form a sealed space, an injection step of suctioning air in the sealed space formed by the sealing step, reducing a pressure of the sealed space, and injecting a thermosetting resin material into the fiber base material sealed in the sealed space, a curing step of heating and curing the thermosetting resin material injected into the fiber base material by the injection step, a detachment step of detaching a fiber-reinforced composite including the thermosetting resin material cured by the curing step and the fiber base material, from the forming die, and a removal step of reducing a pressure of an internal space sealed by the cover member so that the foam contracts, and removing the core part accommodated in the hollow part of the fiber-reinforced composite.

According to another aspect of the present disclosure, there is provided a fiber-reinforced composite forming apparatus including a core part including an elastic long foam and a cover member for sealing the foam, a forming die in which a fiber base material accommodating the core part in a hollow part is aligned, a sealing member that seals the fiber base material in the forming die to form a sealed space, a suction part that suctions air in the sealed space to reduce a pressure of the sealed space, a resin injection part that injects a thermosetting resin material into the fiber base material sealed in the sealed space whose pressure is reduced by the suction part, and a heating part that heats and cures the thermosetting resin material injected into the fiber base material by the resin injection part in the sealed space whose pressure is reduced by the suction part. The core part includes a connection member that connects an internal space sealed by the cover member to a pressure-reducing source.

### Advantageous Effects of Invention

According to the present disclosure, it is possible to provide the fiber-reinforced composite forming method and the fiber-reinforced composite forming apparatus which can form the fiber-reinforced composite including the hollow part without requiring complicated work.

### Brief Description of Drawings

Fig. 1 is a cross-sectional view illustrating a forming apparatus according to a first embodiment of the present disclosure.
Fig. 2 is a sectional view taken along line A-A of the forming apparatus illustrated in Fig. 1.
Fig. 3 is a perspective view illustrating an example of a composite manufactured by the forming apparatus illustrated in Fig. 1.
Fig. 4 is a flowchart illustrating a composite forming method according to the first embodiment of the present disclosure.
Fig. 5 is a cross-sectional view illustrating the forming apparatus before a fiber base material is aligned in a forming die.
Fig. 6 is a cross-sectional view illustrating the forming apparatus after the fiber base material is aligned in the forming die.
Fig. 7 is a longitudinal sectional view illustrating a composite and a core part which are detached from the forming die.
Fig. 8 is a longitudinal sectional view illustrating the core part and the composite in which a pressure of an internal space is reduced.
Fig. 9 is a longitudinal sectional view illustrating the composite and the core part partially pulled out from a hollow part of the composite.
Fig. 10 is a cross-sectional view illustrating a forming apparatus according to a modification example of the first embodiment of the present disclosure.
Fig. 11 is a longitudinal sectional view illustrating a forming apparatus according to a second embodiment of the present disclosure.

### Description of Embodiments

### [First Embodiment]

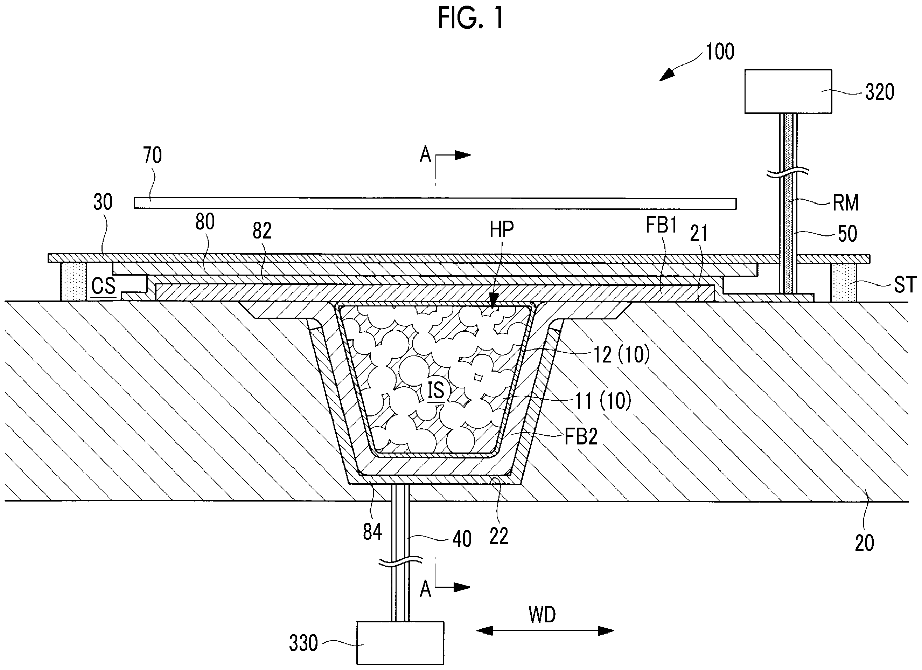

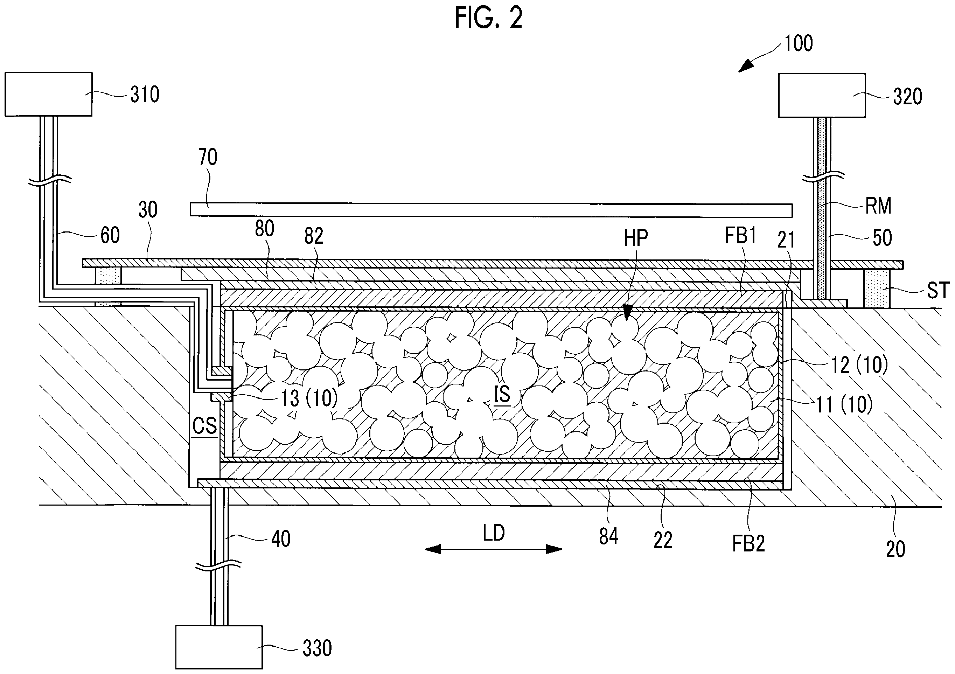

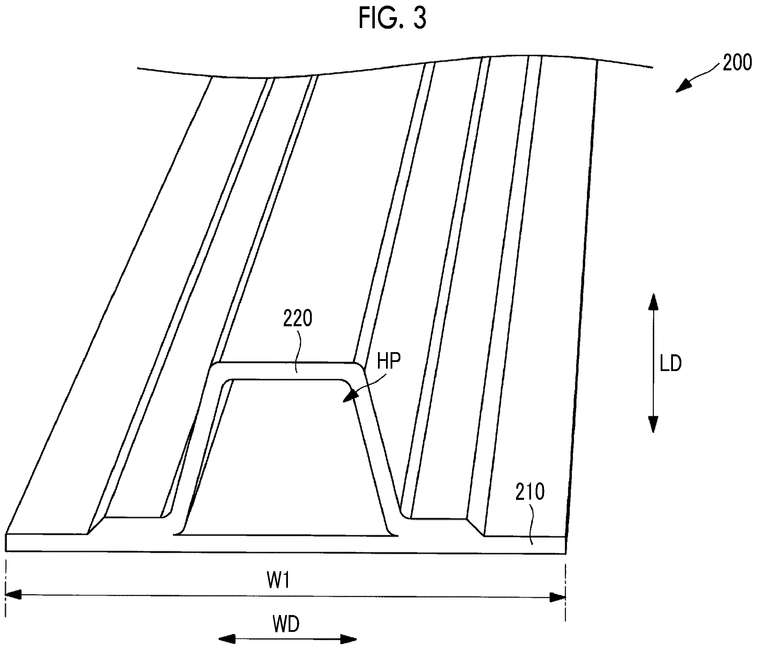

Hereinafter, a forming apparatus (fiber-reinforced composite forming apparatus) 100 according to a first embodiment of the present disclosure and a fiber-reinforced composite forming method for using the forming apparatus will be described with reference to the drawings. Fig. 1 is a cross-sectional view illustrating the forming apparatus 100 according to the first embodiment of the present disclosure. Fig. 2 is a sectional view taken along line A-A of the forming apparatus 100 illustrated in Fig. 1. Fig. 3 is a view illustrating an example of a composite 200 manufactured by the forming apparatus 100 illustrated in Fig. 1.

The forming apparatus 100 of the present embodiment is the following apparatus. A bagging film 30 is used for an upper die. Fiber base materials FB1 and FB2 to be aligned in a forming die 20 serving as a lower die are sealed in a sealed space CS, and a pressure of the sealed space CS is reduced. In this manner, the forming apparatus 100 performs infusion molding for curing a thermosetting resin material RM by filling the sealed space CS with the thermosetting resin material RM.

As an example, the forming apparatus 100 of the present embodiment forms a composite (fiber-reinforced composite) 200 illustrated in Fig. 3. The composite 200 illustrated in Fig. 3 is a stringer used as a reinforcing material for reinforcing a fuselage and a main wing structure of aircraft. The composite 200 is a member having a long shape extending along a longitudinal direction LD and having a protruding central part in a width direction WD. The width direction WD is a direction orthogonal to the longitudinal direction LD on a surface on which the composite 200 is installed.

As illustrated in Fig. 3, the composite 200 includes a flat part 210 having a width W1 along the width direction WD and formed in a flat shape, and a protruding part 220 connected to the flat part 210 and protruding upward in the central part in the width direction WD. The flat part 210 and the protruding part 220 are integrally formed by using the thermosetting resin material RM. The flat part 210 is obtained by infiltrating the thermosetting resin material RM into the fiber base material FB1 illustrated in Figs. 1 and 2. The protruding part 220 is obtained by infiltrating the thermosetting resin material RM into the fiber base material FB2 illustrated in Figs. 1 and 2.

For example, a fiber base material FB1 and a fiber base material FB2 are members in which sheets formed of a reinforcing fiber material such as a carbon fiber and a glass fiber are laminated over a plurality of layers. For example, the thermosetting resin material RM is an epoxy resin, unsaturated polyester, vinyl ester, phenol, cyanate ester or polyimide.

The composite 200 illustrated in Fig. 3 includes a hollow part HP defined by the flat part 210 and the protruding part 220 and extending along the longitudinal direction LD. The forming apparatus 100 of the present embodiment uses a core part 10 serving as a core inserted into the hollow part HP to constantly form the composite 200 having the hollow part HP. The composite 200 is formed in a state where the core part 10 is inserted into the hollow part HP. In this manner, a shape of the hollow part HP can be maintained to have a constant shape when the composite 200 is formed.

As illustrated in Figs. 1 and 2, the forming apparatus 100 of the present embodiment includes the core part 10, a forming die 20, a bagging film (sealing member) 30, a suction line (suction part) 40, a resin injection line (resin injection part) 50, a communication line 60, a heating part 70, a pressure plate 80, a resin diffusion medium 82, and a suction medium 84.

The core part 10 includes a foam 11, a cover member 12, and a connection member 13. The foam 11 is a member formed in a long shape in which a length in the longitudinal direction LD is longer than a length in the width direction WD. The foam 11 is formed of an elastic material having elasticity (for example, silicone rubber). For example, it is desirable that the elastic material for forming the foam 11 is an open cell material illustrated in Figs. 1 and 2. The open cell material has internally formed bubbles communicating with each other, and has a function of contracting when air inside the foam flows outward.

Since the foam 11 is formed of the elastic material having an open cell, elasticity of the core part 10 can be improved. In addition, the elastic material is formed of a highly heat-resistant material such as silicone rubber. In this manner, sufficient heat resistance is provided by the heating part 70, and the core part 10 can be provided with strength for holding the shape of the hollow part HP.

The cover member 12 is a film-shaped or sheet-shaped member that forms an internal space IS in which the foam 11 is sealed. It is preferable to use an elastic material to follow contraction and expansion of the foam. In addition, it is preferable that the cover member 12 has heat resistance to withstand heat curing of a thermosetting resin, and for example, a material thereof includes fluorocarbon rubber or the like. In addition, since the cover member 12 comes into contact with the thermosetting resin material RM infiltrating into the fiber base materials FB1 and FB2, it is necessary to provide a surface of the cover member 12 with a mold release capability. Therefore, it is necessary to perform mold release treatment on the surface of the cover member or to wrap a mold release film.

The connection member 13 is a member that connects the internal space IS sealed by the cover member 12 to a pressure-reducing source 310 such as a vacuum pump via the communication line 60. Since the communication line 60 is connected to the connection member 13, the air existing in the internal space IS can be discharged from the internal space IS, and the pressure of the internal space IS can be reduced to a pressure lower than an atmospheric pressure.

In the forming die 20, the fiber base material FB1 and the fiber base material FB2 in which the core part 10 is accommodated in the hollow part HP are aligned, and the die forms the fiber base material FB1 and the fiber base material FB2 into a desired shape. The forming die 20 illustrated in Figs. 1 and 2 is a female die including a flat surface 21 having the fiber base material FB1 aligned thereon and extending along the width direction WD, and a recessed place 22 having the fiber base material FB2 aligned thereon and having a shape recessed downward from the flat surface 21.

The bagging film 30 is a member that forms the sealed space CS by sealing the fiber base materials FB1 and FB2 in the forming die 20. For example, the bagging film 30 is formed of a resin material containing nylon as a main component. The bagging film 30 is joined to the flat surface 21 of the forming die 20 by the sealant tape ST to cover an entire periphery of the recessed place 22 of the forming die 20.

The suction line 40 is a tube body in which one end is connected to a suction source 330 such as a vacuum pump and the other end is connected to the sealed space CS. Since the suction source 330 and the sealed space CS are connected to each other, the suction line 40 can discharge the air existing in the sealed space CS from the sealed space CS, and can reduce the pressure of the sealed space CS to a pressure lower than the atmospheric pressure.

The resin injection line 50 is a tube body that injects the thermosetting resin material RM into the fiber base materials FB1 and FB2 sealed in the sealed space CS whose pressure is reduced by the suction line 40. One end of the resin injection line 50 is connected to a supply source 320 for supplying the thermosetting resin material RM, and the other end is connected to the sealed space CS. Since the supply source 320 and the sealed space CS are connected to each other, the resin injection line 50 can supply the thermosetting resin material RM from the supply source 320 to the sealed space CS whose pressure is reduced by the suction line 40.

The communication line 60 is a tube body in which one end is connected to the pressure-reducing source 310 and the other end is connected to the connection member 13 of the core part 10. The communication line 60 can reduce the pressure of the internal space IS of the core part 10 by connecting the pressure-reducing source 310 and the connection member 13 to each other. The communication line 60 is used so that the internal space IS is maintained at the atmospheric pressure when the thermosetting resin material RM is heated by the heating part 70.

The heating part 70 is a heat source that heats and cures the thermosetting resin material RM injected into the fiber base materials FB1 and FB2 by the resin injection line 50 in the sealed space CS whose pressure is reduced by the suction line 40. As illustrated in Figs. 1 and 2, the heating part 70 is aligned above the bagging film 30. The heating part 70 may be aligned not only above the bagging film 30 but also below the forming die 20 or inside the forming die 20. In addition, the heating part 70 may be aligned only below the forming die 20 or only inside the forming die 20, and may perform heating by using a method for blowing hot air into a space, such as an oven.

The pressure plate 80 is a plate-like component aligned above the fiber base material FB1 aligned in the forming die 20, and is formed of a metallic material, for example. The pressure plate 80 uses its own weight to apply a pressure to the fiber base material FB1. In this manner, the pressure plate 80 can smooth the surface of the flat part 210 of the composite 200 obtained by infiltrating the thermosetting resin material RM into the fiber base material FB1.

The resin diffusion medium 82 is a sheet-shaped medium for supplying the thermosetting resin material RM supplied from the resin injection line 50 to the sealed space CS while diffusing the thermosetting resin material RM to the entire fiber base material FB1. For example, the resin diffusion medium 82 has a net-shaped internal structure, and has a structure through the inside of which the thermosetting resin material RM can pass. Therefore, the thermosetting resin material RM supplied to the sealed space CS whose pressure is reduced by the suction line 40 passes through the inside of the resin diffusion medium 82, and is diffused to the entire surface of the fiber base material FB1, and infiltrates into the fiber base material FB1.

The suction medium 84 is a sheet-shaped medium for guiding the surplus thermosetting resin material RM passing through the fiber base material FB1 and the fiber base material FB2 to the suction line 40 while diffusing the surplus thermosetting resin material RM. For example, the suction medium 84 has a net-shaped internal structure, and has a structure through the inside of which the thermosetting resin material RM can pass. Therefore, the surplus thermosetting resin material RM passing through the fiber base material FB1 and the fiber base material FB2 is guided to the suction medium 84 from the surface of the fiber base material FB2, passes through the inside of the suction medium 84, and is guided to the suction line 40.

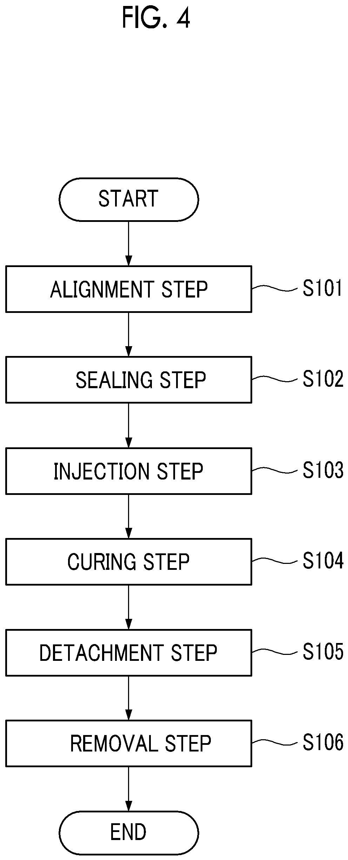

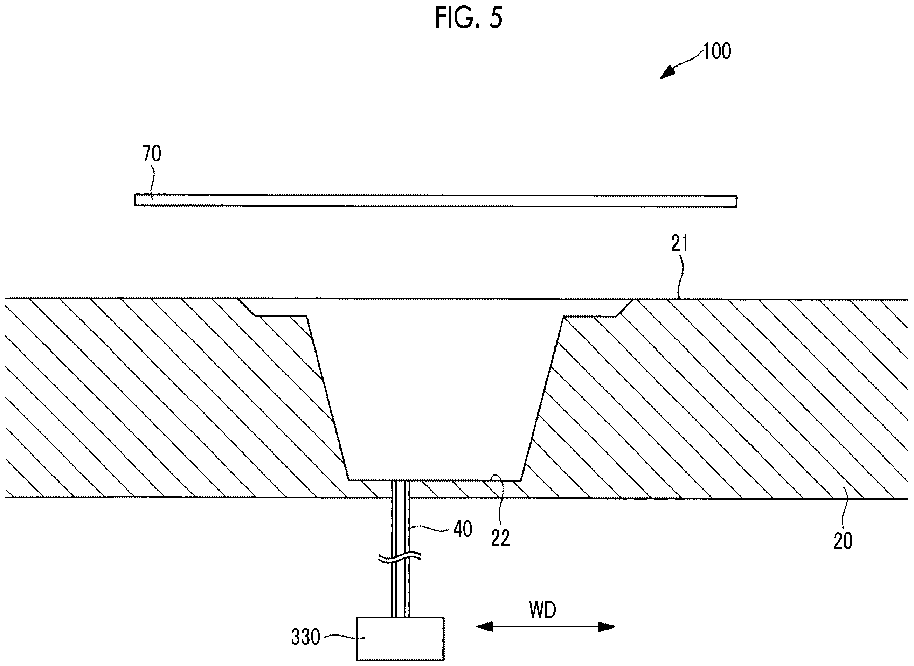

Next, a composite forming method according to the present embodiment will be described with reference to the drawings. Fig. 4 is a flowchart illustrating the composite forming method according to the present embodiment. Fig. 5 is a cross-sectional view illustrating the forming apparatus 100 before the fiber base materials FB1 and FB2 are aligned in the forming die 20.

In Step S101 (alignment step), the fiber base material FB1 and the fiber base material FB2 in which the core part 10 is accommodated in the hollow part HP are aligned in the recessed place 22 of the forming die 20. Specifically, the suction medium 84 is aligned in the recessed place 22 of the forming die 20, the fiber base material FB2 is aligned on the suction medium 84, and the core part 10 is aligned on the fiber base material FB2.

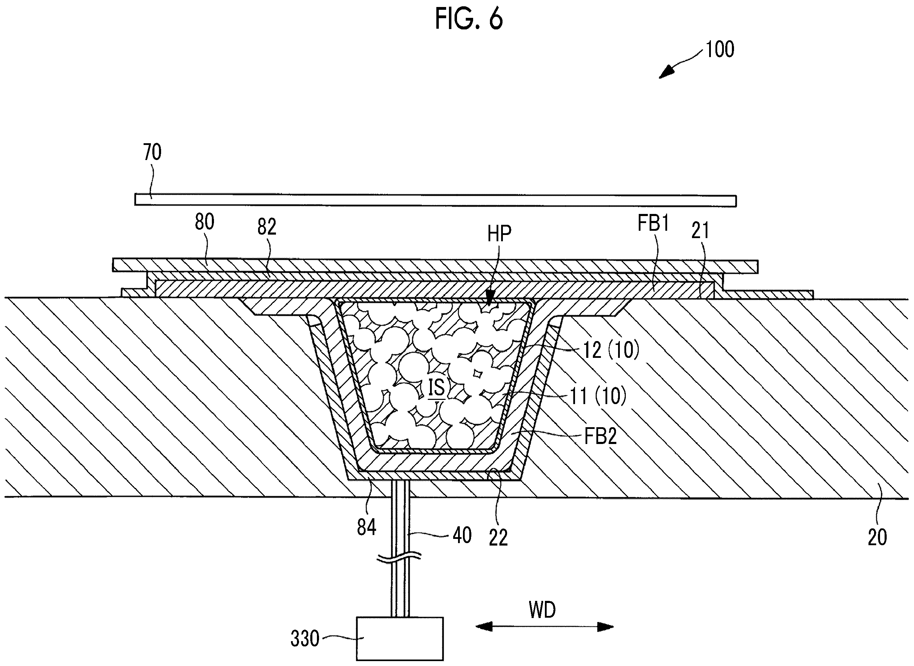

In addition, the fiber base material FB2 is aligned on the core part 10, the resin diffusion medium 82 is aligned on the fiber base material FB2, and the pressure plate 80 is aligned on the resin diffusion medium 82. When the alignment step in Step S101 is completed, the forming apparatus 100 is brought into a state illustrated in Fig. 6. Fig. 6 is a cross-sectional view illustrating the forming apparatus 100 after the fiber base materials FB1 and FB2 are aligned in the forming die 20.

In Step S102 (sealing step), the fiber base material FB1 and the fiber base material FB2 are sealed in the forming die 20 to form the sealed space CS. Specifically, the bagging film 30 is joined to the flat surface 21 of the forming die 20 by the sealant tape ST to cover an entire periphery of the recessed place 22 of the forming die 20, thereby forming the sealed space CS. When the sealing step in Step S102 is completed, the forming apparatus 100 is brought into a state illustrated in Fig. 1.

When the sealed space CS is formed in Step S102 (sealing step), the resin injection line 50 connected to the supply source 320 of the thermosetting resin material RM and the sealed space CS are brought into a state of communicating with each other. In addition, when the sealed space CS is formed, the suction line 40 connected to the suction source 330 and the sealed space CS are brought into a state of communicating with each other.

In Step S103 (injection step), the air in the sealed space CS formed by Step S102 (sealing step) is suctioned to reduce the pressure of the sealed space CS, and the thermosetting resin material RM is injected into the fiber base materials FB1 and FB2 sealed in the sealed space CS. Specifically, the suction source 330 is operated, the air existing in the sealed space CS is discharged from the sealed space CS via the suction line 40, and the pressure of the sealed space CS is reduced to a vacuum state where the pressure is lower than the atmospheric pressure or a pressure close to the vacuum state.

Thereafter, the supply source 320 is brought into a state where the thermosetting resin material RM can be supplied to the resin injection line 50, and the thermosetting resin material RM is supplied to the sealed space CS by using a pressure difference between the resin injection line 50 and the sealed space CS whose pressure is reduced. The thermosetting resin material RM supplied to the sealed space CS passes through the inside of the resin diffusion medium 82, is diffused to the entire surface of the fiber base material FB1, and is injected into the fiber base material FB1. In this manner, the thermosetting resin material RM is brought into a state of infiltrating into the fiber base materials FB1 and FB2.

A portion of the thermosetting resin material RM infiltrating into the fiber base material FB1 further infiltrates into the fiber base material FB2. A portion of the thermosetting resin material RM infiltrating into the fiber base material FB2 passes through the inside of the suction medium 84, is guided to the suction line 40, and is discharged to the suction line 40 as the surplus thermosetting resin material RM.

In Step S103 (injection step), the pressure of the sealed space CS is reduced to the vacuum state or the pressure close to the vacuum state. Accordingly, the fiber base materials FB1 and FB2 and the thermosetting resin material RM infiltrating into the fiber base materials FB1 and FB2 are pressurized by the atmospheric pressure. In this case, in order to hold the shape of the hollow part HP of the fiber base materials FB1 and FB2, it is necessary to hold the shape of the core part 10 accommodated in the hollow part HP.

Therefore, in Step S103 (injection step), the pressure-reducing source 310 communicating with the internal space IS of the core part 10 via the communication line 60 is adjusted so that the pressure of the internal space IS maintains an atmospheric pressure state or the pressure close to the atmospheric pressure. In this manner, the shape of the core part 10 accommodated in the hollow part HP is held.

In Step S104 (curing step), the thermosetting resin material RM injected into the fiber base material FB1 and the fiber base material FB2 in Step S103 (injection step) is heated to a temperature the same as or higher than a thermosetting temperature by the heating part 70, and the thermosetting resin material RM is cured.

In Step S104 (curing step), the internal space IS of the core part 10 is heated by the heating part 70. Therefore, when the internal space IS remains in a sealed state, the air in the internal space IS expands, thereby causing a possibility that the shape of the hollow part HP may be deformed.

Therefore, in Step S104 (curing step), the pressure-reducing source 310 communicating with the internal space IS of the core part 10 via the communication line 60 is adjusted. Alternatively, the communication line 60 is caused to communicate with an external space maintained to have the atmospheric pressure, and the pressure of the internal space IS maintains the atmospheric pressure state or the pressure close to the atmospheric pressure. In this manner, the shape of the core part 10 accommodated in the hollow part HP is held.

In addition, the forming apparatus 100 of the present embodiment may be accommodated in a sealed container (not illustrated). In Step S104 (curing step), an internal pressure of the sealed container may be adjusted so that the pressure of the internal space IS and the internal pressure of the sealed container maintain a predetermined pressure difference.

In addition, as the pressure plate 80, a pressure plate having a sufficient weight to such an extent that the pressure plate does not move with respect to the pressure generated by expansion of the air in the internal space IS may be adopted. In this case, even when a force of expanding the hollow part HP acts due to the expansion of the air in the internal space IS, the pressure plate 80 does not move due to the force. Accordingly, it is possible to prevent the shape of the hollow part HP from being deformed.

In addition, in Figs. 1 and 2, in a state before heating starts to be performed by the heating part 70, the cover member 12 of the core part 10 is aligned in a state of being in contact with the fiber base material FB1. However, other aspects may be adopted. For example, in the state before heating starts to be performed by the heating part 70, a slight clearance may be formed between the core part 10 and the fiber base material FB1.

That is, in the alignment step, in a state where a portion of the core part 10 is not in contact with the fiber base material FB1, the fiber base material FB1 and the fiber base material FB2 are aligned in the forming die 20. Since the core part 10 thermally expands due to the heating, the clearance is formed. In this manner, it is possible to prevent the fiber base material FB1 and the fiber base material FB2 from being excessively pushed due to filling of the clearance between the cover member 12 and the fiber base material FB1 when the heating is performed in the curing step.

In Step S105 (detachment step), the composite 200 including the thermosetting resin material RM cured in Step S104 (curing step), the fiber base material FB1, and the fiber base material FB2 is detached from the forming die 20. Specifically, the sealant tape ST that joins the bagging film 30 and the flat part 210 of the forming die 20 is removed, and the bagging film 30 is detached from the forming die 20.

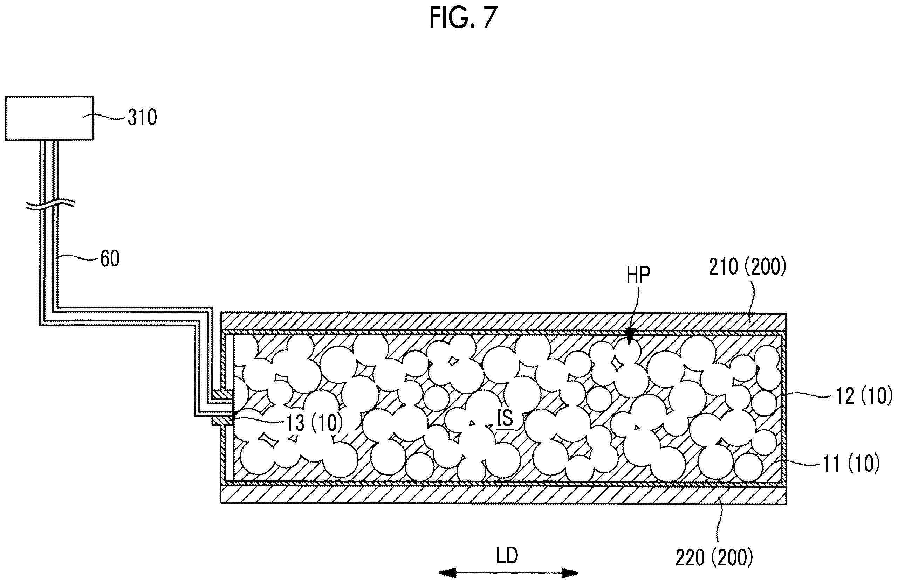

The pressure plate 80 and the resin diffusion medium 82 are detached from the forming die 20 from which the bagging film 30 is detached. Thereafter, the composite 200 in a state where the core part 10 is inserted into the hollow part HP is detached from the recessed place 22 of the forming die 20. Fig. 7 is a longitudinal sectional view illustrating the composite 200 and the core part 10 which are detached from the forming die 20.

In Step S106 (removal step), the pressure of the internal space IS sealed by the cover member 12 is reduced so that the foam 11 contracts, and the core part 10 accommodated in the hollow part HP of the composite 200 is removed. Specifically, the pressure-reducing source 310 is operated to discharge the air existing in the internal space IS from the internal space IS, and the pressure in the internal space IS is reduced to the pressure lower than the atmospheric pressure.

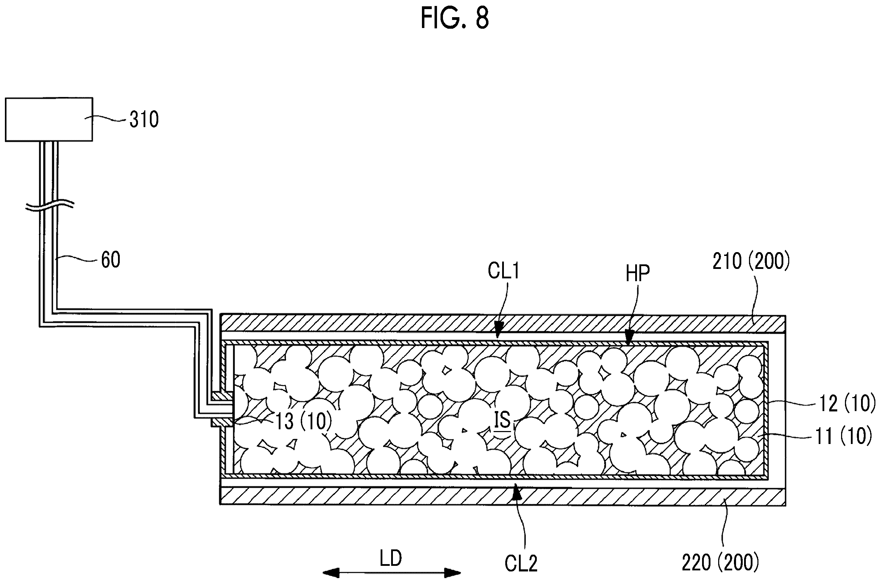

Fig. 8 is a longitudinal sectional view illustrating the core part 10 and the composite 200 in which the pressure of the internal space IS is reduced. As illustrated in Fig. 8, when the pressure in the internal space IS is reduced to the pressure lower than the atmospheric pressure, the foam 11 of the core part 10 contracts due to an action of the atmospheric pressure. In this manner, a clearance CL1 is formed between the core part 10 and the flat part 210 of the composite 200, and a clearance CL2 is formed between the core part 10 and the protruding part 220 of the composite 200.

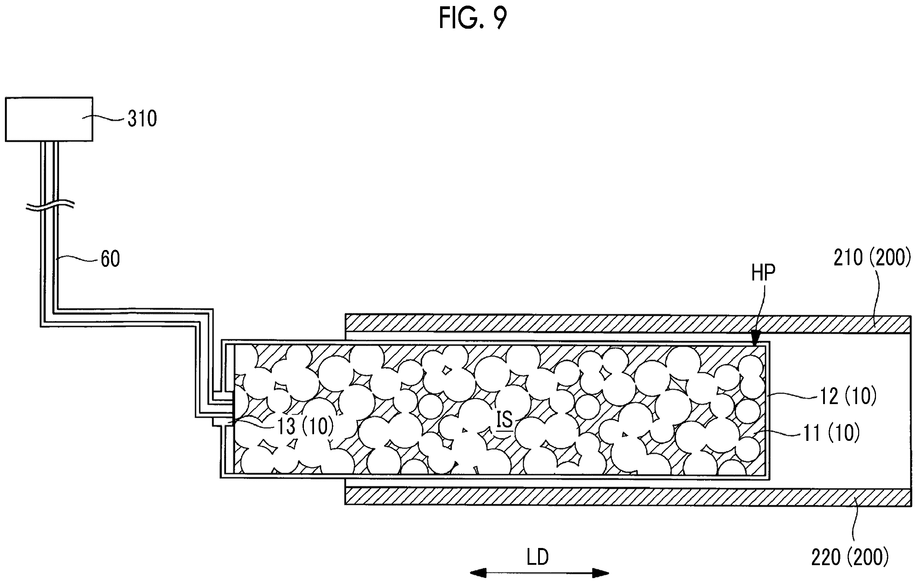

The core part 10 is moved in a direction away from the composite 200 along the longitudinal direction LD in a state where the foam 11 of the core part 10 contracts. In this manner, the core part 10 accommodated in the hollow part HP of the composite 200 is pulled out, and is removed from the composite 200. Fig. 9 is a longitudinal sectional view illustrating the composite 200 and the core part 10 partially pulled out from the hollow part HP of the composite 200.

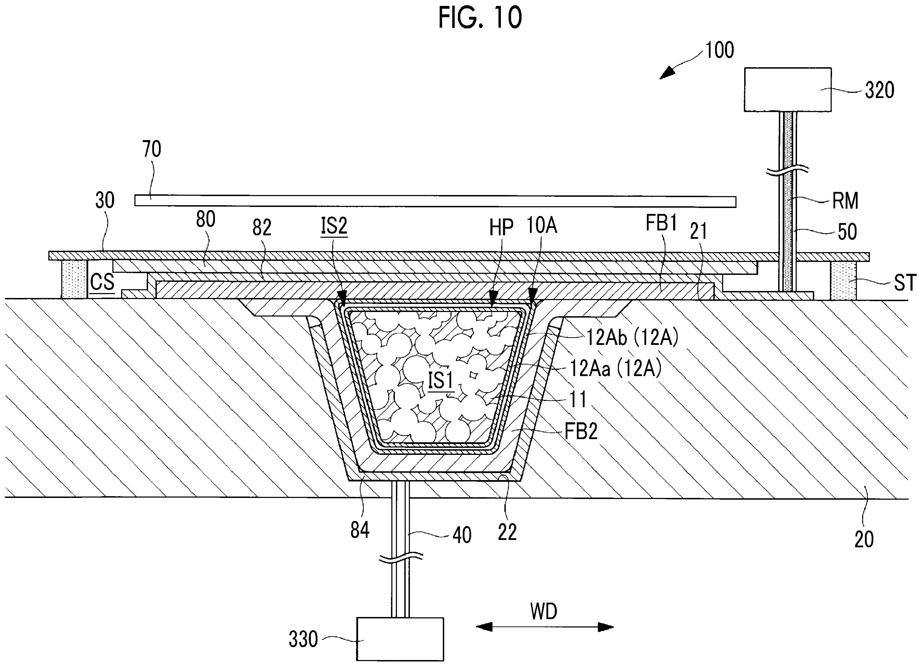

In the present embodiment described above, the core part 10 inserted into the hollow part HP of the composite 200 includes the cover member 12 and the foam 11 aligned in the internal space IS of the cover member 12. However, other aspects may be adopted. For example, as illustrated in a modification example in Fig. 10, the core part 10A inserted into the hollow part HP of the composite 200 may include a cover member 12A including an inner cover 12Aa and an outer cover 12Ab, and the foam 11.

Fig. 10 is a cross-sectional view illustrating the forming apparatus 100 according to a modification example of the embodiment. In the core part 10A of the forming apparatus 100 according to the modification example, the inner cover (inner cover) 12Aa is a film-shaped or sheet-shaped member that forms a first internal space IS1 in which the foam 11 is sealed. The first internal space IS1 sealed by the inner cover 12Aa is connected to the pressure-reducing source 310 illustrated in Fig. 2.

In the core part 10A of the forming apparatus 100 according to the modification example, the outer cover (outer cover) 12Ab is a film-shaped or sheet-shaped member that accommodates the inner cover 12Aa and forms a second internal space IS2 with the inner cover 12Aa. The second internal space IS2 is connected to another pressure-reducing source (not illustrated) different from the pressure-reducing source 310.

In the modification example, when Step S103 (injection step) and Step S104 (curing step) are performed, the pressure-reducing source 310 connected to the first internal space IS1 reduces the pressure of the first internal space IS1 sealed by the inner cover 12Aa to the pressure lower than the atmospheric pressure, and adjusts the foam 11 not to expand after being heated by the heating part 70.

On the other hand, a pressure-reducing source (not illustrated) connected to the second internal space IS2 is adjusted so that the second internal space IS2 sealed by the outer cover 12Ab is maintained at the atmospheric pressure. The pressure of the sealed space CS is reduced by the suction source 330. However, the second internal space IS2 aligned inside the sealed space CS maintains the atmospheric pressure. Therefore, it is possible to prevent the outer cover 12Ab from being deformed so that the hollow part HP contracts after coming into contact with the fiber base materials FB1 and FB2.

In the modification example, the pressure of the first internal space IS1 is reduced to the pressure lower than the atmospheric pressure, and the second internal space IS2 is adjusted to be maintained at the atmospheric pressure. Therefore, in Step S103 (injection step) and Step S104 (curing step), it is possible to suppress a possibility that a force of expanding the hollow part HP may act due to the expansion of the air in the first internal space IS1 and the second internal space IS2. Therefore, the pressure plate 80 illustrated in Fig. 10 may not be provided.

An operation and an advantageous effect of the forming method of the composite 200 of the present embodiment described above will be described.

According to the fiber-reinforced composite forming method of the present embodiment, the fiber base materials FB1 and FB2 in which the core part 10 is accommodated in the hollow part HP are aligned in the forming die 20. The fiber base materials FB1 and FB2 are sealed in the forming die 20 to form the sealed space CS. The pressure of the sealed space CS is reduced, the thermosetting resin material RM is injected into the fiber base materials FB1 and FB2, and the thermosetting resin material RM is heated and cured. In this manner, the composite 200 including the cured thermosetting resin material RM and fiber base materials FB1 and FB2 is formed. When the thermosetting resin material RM is cured after being injected into the fiber base materials FB1 and FB2, the core part 10 is accommodated in the hollow part HP of the fiber base materials FB1 and FB2. Therefore, the shape of the hollow part HP of the fiber base materials FB1 and FB2 can be maintained.

In addition, according to the fiber-reinforced composite forming method of the present embodiment, after the composite 200 is detached from the forming die 20, the pressure of the internal space IS of the core part 10 sealed by the cover member 12 is reduced so that the foam 11 contracts. In this manner, the clearances CL1 and CL2 are formed between the core part 10 and the hollow part HP of the composite 200. Therefore, the core part 10 accommodated in the hollow part HP can be easily removed. In this way, according to the fiber-reinforced composite forming method of the present embodiment, the composite 200 including the hollow part HP can be formed without requiring complicated work.

In addition, according to the fiber-reinforced composite forming method of the present embodiment, the thermosetting resin material RM can be injected into the fiber base materials FB1 and FB2 via the resin injection line 50 by reducing the pressure of the sealed space CS via the suction line 40. The thermosetting resin material RM can infiltrate into the fiber base materials FB1 and FB2 by utilizing a differential pressure between the pressure of the sealed space CS and the atmospheric pressure.

In addition, according to the fiber-reinforced composite forming method of the present embodiment, the internal space IS maintains the atmospheric pressure when the thermosetting resin material RM is heated. Therefore, it is possible to suppress a disadvantage that the hollow part HP of the fiber base materials FB1 and FB2 may be deformed when the air existing in the internal space IS is pressurized to the atmospheric pressure or higher.

In addition, according to the fiber-reinforced composite forming method of the present embodiment, the foam 11 is formed of the elastic material having the open cell. Therefore, the foam can sufficiently contract by reducing the pressure of the internal space IS sealed by the cover member 12. 11, and the core part 10 can be easily removed from the hollow part HP of the fiber-reinforced composite.

### [Second Embodiment]

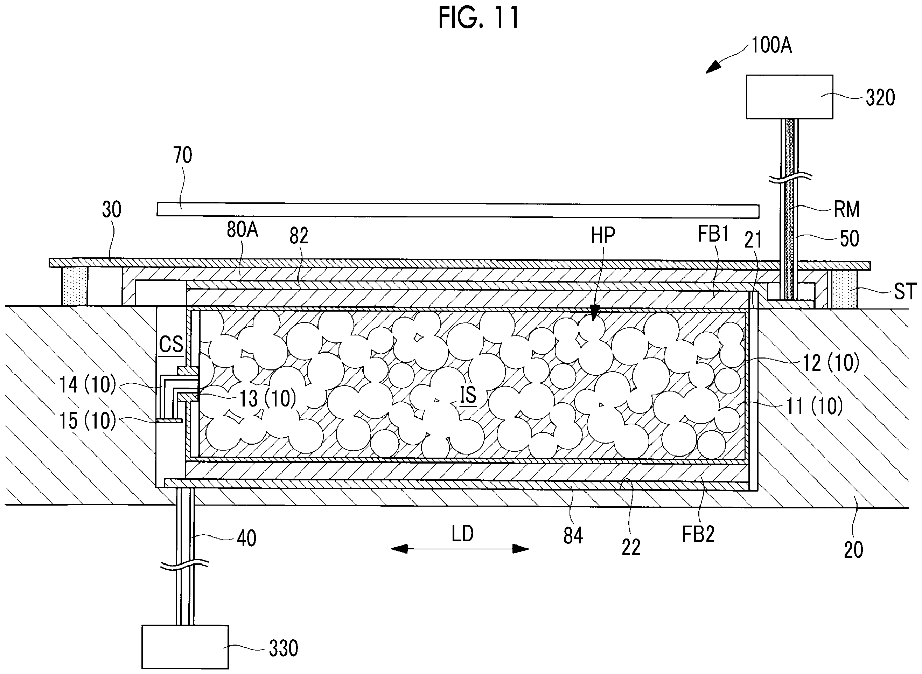

Next, a forming apparatus 100A according to a second embodiment of the present disclosure will be described with reference to the drawings. Fig. 11 is a longitudinal sectional view illustrating the forming apparatus 100A according to the second embodiment of the present disclosure. The present embodiment is a modification example of the first embodiment, and is the same as the first embodiment except for a case described below. Thus, description thereof will be omitted below.

The core part 10 of the forming apparatus 100 of the first embodiment connects the connection member 13 and the pressure-reducing source 310 to each other via the communication line 60. In contrast, the forming apparatus 100A of the present embodiment connects the connection member 13 and the sealed space CS to each other via a communication part 14.

As illustrated in Fig. 11, the core part 10 of the forming apparatus 100A of the present embodiment includes the communication part 14 and a membrane 15. The communication part 14 is a tube body in which one end is connected to the connection member 13 and the other end is open to the sealed space CS. The membrane 15 is attached to an end portion where the communication part 14 is open to the sealed space CS.

The membrane 15 is a separation membrane that does not allow permeation of the thermosetting resin material RM while allowing the air to permeate between the internal space IS and the sealed space CS. The membrane 15 is provided to prevent the thermosetting resin material RM injected into the sealed space CS from entering the internal space IS of the core part 10.

The forming method for using the forming apparatus 100A of the present embodiment is different from the forming method for using the forming apparatus 100 of the first embodiment in the following points.

A first different point is that an operation in Step S103 (injection step) in Fig. 4 according to the first embodiment is different. In the first embodiment, the shape of the core part 10 accommodated in the hollow part HP is held by causing the pressure of the internal space IS to maintain the atmospheric pressure state or the pressure close to the atmospheric pressure.

In contrast, in the present embodiment, the internal space IS and the sealed space CS communicate with each other via the communication part 14. Therefore, in the injection step of the present embodiment, the air in the internal space IS is guided to the suction line 40 via the internal space IS by reducing the pressure of the sealed space CS via the suction line 40.

Since the internal space IS and the sealed space CS communicate with each other, as in the sealed space CS, the pressure of the internal space IS is reduced to the vacuum state or the pressure close to the vacuum state. When the sealed space CS is reduced to the vacuum state or the pressure close to the vacuum state, the bagging film 30 and the pressure plate 80A are pressed toward the forming die 20 by the action of the atmospheric pressure.

On the other hand, the pressure plate 80A of the present embodiment has a shape that comes into contact with the flat surface 21 of the forming die 20 to surround the recessed place 22. Therefore, even when the pressure plate 80A is pressed toward the forming die 20, the pressure plate 80A comes into contact with the forming die 20 so that a position of the pressure plate 80A is maintained. Therefore, the shapes of the fiber base materials FB1 and FB2 aligned below the pressure plate 80A are maintained.

In addition, since the pressure in the internal space IS is the same as the pressure of the sealed space CS, the shape of the core part 10 is maintained. In this manner, the shapes of the fiber base materials FB1 and FB2 are maintained in the injection step.

A second different point is that an operation in Step S104 (curing step) in Fig. 4 according to the first embodiment is different. In the first embodiment, the pressure of the internal space IS of the core part 10 maintains the atmospheric pressure state or the pressure close to the atmospheric pressure so that the shape of the core part 10 accommodated in the hollow part HP is held.

In contrast, in the present embodiment, the pressure of the internal space IS of the core part 10 maintains the same pressure as the pressure of the sealed space CS. That is, the internal space IS and the sealed space CS communicate with each other by the communication part 14. Therefore, the pressure of the internal space IS of the core part 10 and the pressure of the sealed space CS are maintained to be the same as each other.

In the curing step, the air in the internal space IS expands by the heating part 70. However, when the pressure of the internal space IS is reduced to the vacuum state or a state close to the vacuum state where the pressure of the internal space IS is the same as the pressure of the sealed space CS, all or most of the air in the internal space IS are discharged outward. Therefore, even when the air in the internal space IS expands by the heating part 70, the shape of the core part 10 is hardly changed. Therefore, the shape of the core part 10 accommodated in the hollow part HP can be held.

According to the forming method for using the forming apparatus 100A of the present embodiment described above, the core part 10 includes the communication part 14. Therefore, the pressure of the sealed space CS is reduced via the suction line 40 in the injection step. In this manner, the air in the internal space IS is guided to the suction line 40 via the sealed space CS. In the curing step, the internal space IS is heated in a state where the air is reduced. Therefore, even when the internal space expands due to the heating, there is no possibility that the core part may be excessively deformed to deform the hollow part of the fiber base material.

### (Another Embodiment)

In the above description, the resin injection line 50 is provided above the forming die 20, and the suction line 40 is provided in the recessed place 22 of the forming die 20. However, other aspects may be adopted. For example, the resin injection line 50 may be provided in the recessed place 22 of the forming die 20, and the suction line 40 may be provided above the forming die 20.

In addition, in the above description, the forming die 20 is the female die having the flat surface 21 and the recessed place 22 having a shape recessed downward from the flat surface 21. However, other aspects may be adopted. For example, the forming die 20 may be a male die having a flat surface and a protruding part protruding upward from the flat surface.

The fiber-reinforced composite forming method in the above-described embodiment can be understood as follows, for example.

According to the present disclosure, there is provided the fiber-reinforced composite forming method including the alignment step (S101) of aligning the fiber base material (FB1, FB2) in which the core part (10) including the elastic long foam (11) and the cover member (12) for sealing the foam is accommodated in the hollow part (HP), in the forming die (20), the sealing step (S102) of sealing the fiber base material in the forming die to form the sealed space (CS), the injection step (S103) of suctioning the air in the sealed space formed by the sealing step, reducing the pressure in the sealed space, and injecting the thermosetting resin material into the fiber base material sealed in the sealed space, the curing step (S104) of heating and curing the thermosetting resin material injected into the fiber base material by the injection step, the detachment step (S105) of detaching the fiber-reinforced composite (200) including the thermosetting resin material cured by the curing step and the fiber base material, from the forming die, and the removal step (S106) of reducing the pressure of the internal space (IS) sealed by the cover member so that the foam contracts, and removing the core part accommodated in the hollow part of the fiber-reinforced composite.

According to the fiber-reinforced composite forming method in the present disclosure, the fiber base material in which the core part is accommodated in the hollow part is aligned in the forming die. The fiber base material is sealed in the forming die to form the sealed space. The pressure of the sealed space is reduced, the thermosetting resin material is injected into the fiber base material, and the thermosetting resin material RM is heated and cured. In this manner, the fiber-reinforced composite including the cured thermosetting resin material and the fiber base material is formed. When the thermosetting resin is cured after being injected into the fiber base material, the core part is accommodated in the hollow part of the fiber base material. Therefore, the shape of the hollow part of the fiber base material can be maintained.

In addition, according to the fiber-reinforced composite forming method in the present disclosure, after the fiber-reinforced composite is detached from the forming die, the pressure of the internal space of the core part sealed by the cover member is reduced so that the foam contracts. In this manner, the clearance is formed between the core part and the hollow part of the fiber-reinforced composite. Therefore, the core part accommodated in the hollow part can be easily removed. In this way, according to the fiber-reinforced composite forming method in the present disclosure, the fiber-reinforced composite including the hollow part can be formed without requiring complicated work.

In the fiber-reinforced composite forming method according to the present disclosure, it is preferable to adopt the following configuration. In the sealing step, the resin injection line (50) connected to the supply source (320) of the thermosetting resin material and the sealed space are caused to communicate with each other, and the suction line (40) connected to the suction source (330) and the sealed space are caused to communicate with each other. In the injection step, the thermosetting resin material is injected into the fiber base material via the resin injection line by reducing the pressure of the sealed space via the suction line.

According to the fiber-reinforced composite forming method having this configuration, the thermosetting resin material can be injected into the fiber base material via the resin injection line by reducing the pressure of the sealed space via the suction line. The thermosetting resin material can infiltrate into the fiber base material by utilizing the differential pressure between the pressure of the sealed space and the atmospheric pressure.

In the fiber-reinforced composite forming method having the above-described configuration, it is preferable to adopt the following configuration. In the curing step, the internal space is maintained at the atmospheric pressure when the thermosetting resin material is heated.

According to the fiber-reinforced composite forming method having this configuration, the internal space maintains the atmospheric pressure when the thermosetting resin material is heated. Therefore, it is possible to suppress a disadvantage that the hollow part of the fiber base material may be deformed when the air existing in the internal space is pressurized to the atmospheric pressure or higher.

In the fiber-reinforced composite forming method having the above-described configuration, it is preferable to adopt the following configuration. The core part includes the communication part (14) through which the internal space and the sealed space communicate with each other. In the curing step, the air in the internal space is guided to the suction line via the sealed space by reducing the pressure of the sealed space via the suction line.

According to the fiber-reinforced composite forming method having this configuration, the core part includes the communication part. Therefore, in the injection step, the air in the internal space is guided to the suction line via the sealed space by reducing the pressure of the sealed space via the suction line. In the curing step, the heating is performed in a state where the air in the internal space is reduced. Therefore, even when the internal space expands due to the heating, there is no possibility that the core part may be excessively deformed to deform the hollow part of the fiber base material.

In the fiber-reinforced composite forming method having the above-described configuration, it is preferable to adopt the following configuration. The cover member includes the inner cover for sealing the foam and the outer cover for accommodating the inner cover. In the curing step, the pressure of the first internal space sealed by the inner cover is reduced to the pressure lower than the atmospheric pressure, and the pressure of the second internal space between the inner cover and the outer cover is maintained at the atmospheric pressure.

According to the fiber-reinforced composite forming method having this configuration, the pressure of the first internal space sealed by the inner cover is reduced to the pressure lower than the atmospheric pressure. In this manner, the foam can be adjusted not to expand after being heated by the heating part. In addition, since the pressure of the second internal space between the outer cover and the inner cover is maintained at the atmospheric pressure, it is possible to prevent the hollow part of the core part from being deformed to contract.

In the fiber-reinforced composite forming method having the above-described configuration, it is preferable to adopt the following configuration. In the alignment step, the fiber base material is aligned in the forming die in a state where a portion of the core part is not in contact with the fiber base material.

According to the fiber-reinforced composite forming method having this configuration, a portion of the core part does not come into contact with the fiber base material in a state before the heating starts to be performed by the heating step. Therefore, when the heating starts to be performed by the heating step and the foam expands, it is possible to prevent the fiber base material from being excessively pushed due to filling of the clearance between the portion of the core part and the fiber base material.

In the fiber-reinforced composite forming method having the above-described configuration, the foam is formed of the elastic material having the open cell.

According to the fiber-reinforced composite forming method having this configuration, the foam is formed of the elastic material having the open cell. Therefore, the foam can sufficiently contract by reducing the pressure of the internal space sealed by the cover member, and the core part can be easily removed from the hollow part of the fiber-reinforced composite.

The fiber-reinforced composite forming apparatus in the above-described embodiment can be understood as follows, for example.

According to the present disclosure, there is provided the fiber-reinforced composite forming apparatus including the core part (10) including the elastic long foam (11) and the cover member (12) for sealing the foam, the forming die (20) in which the fiber base material (FB1, FB2) accommodating the core part in the hollow part (HP) is aligned, the sealing member (30) that seals the fiber base material in the forming die to form the sealed space (CS), the suction part (40) that suctions the air in the sealed space to reduce the pressure of the sealed space, the resin injection part (50) that injects the thermosetting resin material into the fiber base material sealed in the sealed space whose pressure is reduced by the suction part, and the heating part (60) that heats and cures the thermosetting resin material injected into the fiber base material by the resin injection part in the sealed space whose pressure is reduced by the suction part. The core part includes the connection member (13) that connects the internal space (IS) sealed by the cover member to the pressure-reducing source (310).

According to the fiber-reinforced composite forming apparatus in the present disclosure, the fiber base material in which the core part is accommodated in the hollow part is aligned in the forming die. The fiber base material is sealed in the forming die to form the sealed space. The pressure of the sealed space is reduced, the thermosetting resin material is injected into the fiber base material, and the thermosetting resin material is heated and cured. In this manner, the fiber-reinforced composite including the cured thermosetting resin material and the fiber base material is formed. When the thermosetting resin is cured after being injected into the fiber base material, the core part is accommodated in the hollow part of the fiber base material. Therefore, the shape of the hollow part of the fiber base material can be maintained.

In addition, according to the fiber-reinforced composite forming apparatus in the present disclosure, the core part includes the connection member that connects the internal space to the pressure-reducing source. Therefore, after the fiber-reinforced composite is detached from the forming die, the pressure of the internal space of the core part sealed by the cover member is reduced so that the foam contracts. In this manner, the clearance is formed between the core part and the hollow part of the fiber-reinforced composite. In this manner, the core part accommodated in the hollow part of the fiber-reinforced composite can be easily removed. In this way, according to the fiber-reinforced composite forming apparatus in the present disclosure, the fiber-reinforced composite including hollow part can be formed without requiring complicated work.

In the fiber-reinforced composite forming apparatus according to the present disclosure, it is preferable to adopt the following configuration. The resin injection part is a tube body connected to the supply source (320) of the thermosetting resin material and communicating with the sealed space. The suction part is a tube body connected to the suction source (330) and communicating with the sealed space.

According to the fiber-reinforced composite forming apparatus having this configuration, the pressure of the sealed space is reduced via the tube body connected to the suction source. In this manner, the thermosetting resin material can be injected into the fiber base material via the tube body connected to the supply source. The thermosetting resin can infiltrate into the fiber base material by utilizing the differential pressure between the pressure of the sealed space and the atmospheric pressure.

In the fiber-reinforced composite forming apparatus having the above-described configuration, it is preferable to adopt the following configuration. The fiber-reinforced composite forming apparatus includes the communication line (60) that communicates with the internal space, and is maintained at the internal space at the atmospheric pressure when the thermosetting resin material is heated by the heating part.

According to the fiber-reinforced composite forming apparatus having this configuration, the fiber-reinforced composite forming apparatus includes the communication line. Therefore, the pressure of the internal space maintains the atmospheric pressure when the thermosetting resin material is heated. In this manner, it is possible to suppress a disadvantage that the hollow part of the fiber base material may be deformed when the air existing in the internal space is pressurized to the atmospheric pressure or higher.

In the fiber-reinforced composite forming apparatus having the above-described configuration, it is preferable to adopt the following configuration. The core part includes the communication part (14) through which the internal space and the sealed space communicate with each other.

According to the fiber-reinforced composite forming apparatus having this configuration, the core part includes the communication part. Therefore, when the thermosetting resin material is injected by the resin injection part, the pressure of the sealed space is reduced via the suction line. In this manner, the air in the internal space is guided to the suction line via the sealed space. When the thermosetting resin material is heated by the heating part, the foam is heated in a state where the air in the internal space is reduced. Therefore, even when the foam expands due to the heating, there is no possibility that the core part may be excessively deformed to deform the hollow part of the fiber base material.

In the fiber-reinforced composite forming apparatus having the above-described configuration, it is preferable to adopt the following configuration. The cover member includes the inner cover for sealing the foam and the outer cover for accommodating the inner cover. When the thermosetting resin material is heated by the heating part, the pressure of the first internal space sealed by the inner cover is reduced to the pressure lower than the atmospheric pressure, and the pressure of the second internal space between the inner cover and the outer cover maintains the atmospheric pressure.

According to the fiber-reinforced composite forming apparatus having this configuration, the pressure of the first internal space sealed by the inner cover is reduced to the pressure lower than the atmospheric pressure. In this manner, the foam can be adjusted not to expand after being heated by the heating part. In addition, since the pressure of the second internal space between the outer cover and the inner cover is maintained at the atmospheric pressure, it is possible to prevent the hollow part of the core part from being deformed to contract.

In the fiber-reinforced composite forming apparatus having the above-described configuration, it is preferable to adopt the following configuration. In a state where the thermosetting resin material is not heated by the heating part, the core part is accommodated in the hollow part in a state where a portion of the core part is not in contact with the fiber base material.

According to the fiber-reinforced composite forming apparatus having this configuration, a portion of the core part does not come into contact with the fiber base material in a state where the thermosetting resin material is not heated by the heating part. Therefore, when the thermosetting resin material starts to be heated by the heating part and the foam expands, it is possible to prevent the fiber base material from being excessively pushed due to filling of the clearance between the portion of the core part and the fiber base material.

In the fiber-reinforced composite forming apparatus having the above-described configuration, it is preferable to adopt the following configuration. The foam is formed of the elastic material having the open cell.

According to the fiber-reinforced composite forming apparatus having this configuration, the foam is formed of the elastic material having the open cell. Therefore, the foam can sufficiently contract by reducing the pressure of the internal space sealed by the cover member, and the core part can be easily removed from the hollow part of the fiber-reinforced composite.

### Reference Signs List

- 10: Core part
- 11: Foam
- 12: Cover member
- 13: Connection member
- 14: Communication part
- 15: Membrane
- 20: Forming die
- 21: Flat surface
- 22: Recessed place
- 30: Bagging film (Sealing member)
- 40: Suction line (Suction part)
- 50: Resin injection line (Resin injection part)
- 60: Communication line
- 70: Heating part
- 80, 80A: Pressure plate
- 82: Resin diffusion medium
- 84: Suction medium
- 100, 100A: Forming apparatus
- 200: Composite (Fiber-reinforced composite)
- 210: Flat part
- 220: Protruding part
- 310: Pressure-reducing source
- 320: Supply source
- 330: Suction source
- CI: Internal space
- CL1, CL2: Clearance
- CS: Sealed space
- FB1, FB2: Fiber base material
- HP: Hollow part
- IS: Internal space
- LD: Longitudinal direction
- RM: Thermosetting resin material
- ST: Sealant tape
- WD: Width direction

## Claims

1. A fiber-reinforced composite forming method comprising:
an alignment step (S101) of aligning a fiber base material (FB1, FB2) in which a core part (10) including an elastic long foam (11) and a cover member (12) for sealing the foam (11) is accommodated in a hollow part (HP), in a forming die (20);
a sealing step (S102) of sealing the fiber base material (FB1, FB2) in the forming die (20) to form a sealed space (CS);
an injection step (S103) of suctioning air in the sealed space (CS) formed by the sealing step (S102), reducing a pressure of the sealed space (CS), and injecting a thermosetting resin material (RM) into the fiber base material (FB1, FB2) sealed in the sealed space (CS);
a curing step (S104) of heating and curing the thermosetting resin material (RM) injected into the fiber base material (FB1, FB2) by the injection step (103);
a detachment step (S105) of detaching a fiber-reinforced composite (200) including the thermosetting resin material (RM) cured by the curing step (S104) and the fiber base material (FB1, FB2), from the forming die (20); and
a removal step (S106) of reducing a pressure of an internal space (CI) sealed by the cover member (12) so that the foam (11) contracts, and removing the core part (10) accommodated in the hollow part (HP) of the fiber-reinforced composite (200)
wherein in the sealing step (S102), a resin injection line (50) connected to a supply source (320) of the thermosetting resin material (RM) and the sealed space (CS) are caused to communicate with each other, and a suction line (40) connected to a suction source (330) and the sealed space (CS) are caused to communicate with each other,
in the injection step (103), the thermosetting resin material (RM) is injected into the fiber base material (FB1m FB2) via the resin injection line (50) by reducing the pressure of the sealed space (CS) via the suction line (40); and
**characterized in that**,
in the curing step (S104), the internal space (CI) is maintained at an atmospheric pressure when the thermosetting resin material (RM) is heated.

2. The fiber-reinforced composite forming method according to Claim 1,
wherein the core part (10) includes a communication part (14) through which the internal space (CI) and the sealed space (CS) communicate with each other, and
in the injection step (S103), the air in the internal space (CI) is guided to the suction line (40) via the sealed space (CS) by reducing the pressure of the sealed space (CS) via the suction line (40).

3. The fiber-reinforced composite forming method according to Claim 1,
wherein the cover member (12A) includes an inner cover (12Aa) for sealing the foam and an outer cover (12Ab) for accommodating the inner cover (12Aa), and
in the curing step (S104), a pressure of a first internal space (IS1) sealed by the inner cover (12Aa) is reduced to a pressure lower than an atmospheric pressure, and a pressure of a second internal space (IS2) between the inner cover (12Aa) and the outer cover (12Ab) is maintained at the atmospheric pressure.

4. The fiber-reinforced composite forming method according to any one of Claims 1 to 3,
wherein in the alignment step (S101), the fiber base material (FB1, FB2) is aligned in the forming die (20) in a state where a portion of the core part (10) is not in contact with the fiber base material (FB1, FB2).

5. The fiber-reinforced composite forming method according to any one of Claims 1 to 4,
wherein the foam (11) is formed of an elastic material having an open cell.

6. A fiber-reinforced composite forming apparatus comprising:
a core part (10) including an elastic long foam (11) and a cover member (12) configured for sealing the foam (11);
a forming die (20) in which a fiber base material (F1, FB2) accommodating the core part (10) in a hollow part (HP) is aligned;
a sealing member (30) that is configured to seal the fiber base material (FB1, FB2) in the forming die (20) to form a sealed space (CS);
a suction part (40) that is configured to suction air in the sealed space (CS) to reduce a pressure of the sealed space (CS);
a resin injection part (50) that is configured to inject a thermosetting resin material (RM) into the fiber base material (FB1, FB2) sealed in the sealed space (CS) whose pressure is reduced by the suction part (40); and
a heating part (70) that is configured to heat and cure the thermosetting resin material (RM) injected into the fiber base material (FB1, FB2) by the resin injection part (50) in the sealed space (CS) whose pressure is reduced by the suction part (40),
wherein the core part (10) includes a connection member (13) that connects an internal space (CI) sealed by the cover member (12) to a pressure-reducing source (310),
**characterized in that**
the resin injection part (50) is a tube body connected to a supply source (320) of the thermosetting resin material (RM) and communicating with the sealed space (CS),
the suction part (40) is a tube body connected to a suction source (330) and communicating with the sealed space (CS), and
the fiber-reinforced composite forming apparatus further comprises a communication line (60) that communicates with the internal space (CS), and is configured to maintain the internal space (CI) at an atmospheric pressure when the thermosetting resin material (RM) is heated by the heating part (70).

7. The fiber-reinforced composite forming apparatus according to Claim 6,
wherein the core part (10) includes a communication part (14) through which the internal space (CI) and the sealed space (CS) communicate with each other.

8. The fiber-reinforced composite forming apparatus according to Claim 6,
wherein the cover member (12A) includes an inner cover (12Aa) for sealing the foam (11) and an outer cover (12Ab) for accommodating the inner cover (12Aa), wherein the cover member (12A) is configured such that
when the thermosetting resin material (RM) is heated by the heating part (70), a pressure of a first internal space (CI1) sealed by the inner cover (12Aa) is reduced to a pressure lower than an atmospheric pressure, and a pressure of a second internal space (CI2) between the inner cover (12Aa) and the outer cover (12Ab) is maintained at the atmospheric pressure.

9. The fiber-reinforced composite forming apparatus according to any one of Claims 6 to 8,
wherein in a state where the thermosetting resin material (RM) is not heated by the heating part (70), the core part (10) is configured to be accommodated in the hollow part (HP) in a state where a portion of the core part (10) is not in contact with the fiber base material (FB1, FB2).

10. The fiber-reinforced composite forming apparatus according to any one of Claims 6 to 9,
wherein the foam (11) is formed of an elastic material having an open cell.

## Patentansprüche

1. Verfahren zur Formung von faserverstärkten Verbundwerkstoffen, umfassend:
einen Ausrichtungsschritt (S101) zum Ausrichten eines Faserbasismaterials (FB1, FB2), bei dem ein Kernteil (10), das einen elastischen, langen Schaum (11) und ein Abdeckelement (12) zum Abdichten des Schaums (11) einschließt, in einem hohlen Teil (HP) in einem Formwerkzeug (20) aufgenommen ist;
einen Abdichtungsschritt (S102) zum Abdichten des Faserbasismaterials (FB1, FB2) in dem Formwerkzeug (20), um einen abgedichteten Raum (CS) zu bilden;
einen Einspritzschritt (S103) zum Ansaugen von Luft in den abgedichteten Raum (CS), der durch den Abdichtungsschritt (S102) gebildet wird, wodurch ein Druck des abgedichteten Raums (CS) verringert wird, und Einspritzen eines thermohärtenden Harzmaterials (RM) in das Faserbasismaterial (FB1, FB2), das in dem abgedichteten Raum (CS) abgedichtet ist;
einen Aushärteschritt (S104) zum Erwärmen und Aushärten des thermohärtenden Harzmaterials (RM), das durch den Einspritzschritt (103) in das Faserbasismaterial (FB1, FB2) eingespritzt wird;
ein Ablösungsschritt (S105) zum Ablösen eines faserverstärkten Verbundstoffs (200), der das durch den Aushärteschritt (S104) ausgehärtete thermohärtende Harzmaterial (RM) und das Faserbasismaterial (FB1, FB2) einschließt, von dem Formwerkzeug (20); und
einen Entfernungsschritt (S106) zum Verringern eines Drucks eines Innenraums (CI), der durch das Abdeckelement (12) abgedichtet ist, so dass sich der Schaum (11) zusammenzieht, und Entfernen des Kernteils (10), das in dem hohlen Teil (HP) des faserverstärkten Verbundstoffs (200) aufgenommen ist,
wobei bei dem Abdichtungsschritt (S102) eine Harzeinspritzleitung (50), die mit einer Zufuhrquelle (320) des thermohärtenden Harzmaterials (RM) verbunden ist, und der abgedichtete Raum (CS) dazu veranlasst werden, miteinander zu kommunizieren, und eine Saugleitung (40), die mit einer Saugquelle (330) verbunden ist, und der abgedichtete Raum (CS) dazu veranlasst werden, miteinander in Verbindung zu stehen,
bei dem Einspritzschritt (103) das thermohärtende Harzmaterial (RM) in das Faserbasismaterial (FB1m, FB2) über die Harzeinspritzleitung (50) eingespritzt wird, indem der Druck des abgedichteten Raums (CS) über die Saugleitung (40) verringert wird; und
**dadurch gekennzeichnet, dass**
bei dem Aushärteschritt (S104) der Innenraum (CI) auf Atmosphärendruck gehalten wird, wenn das thermohärtende Harzmaterial (RM) erwärmt wird.

2. Verfahren zur Formung von faserverstärkten Verbundwerkstoffen nach Anspruch 1,
wobei das Kernteil (10) ein Kommunikationsteil (14) einschließt, über das der Innenraum (CI) und der abgedichtete Raum (CS) miteinander kommunizieren, und
bei dem Einspritzschritt (S103) die Luft in dem Innenraum (CI) über den abgedichteten Raum (CS) zu der Saugleitung (40) geleitet wird, indem der Druck des abgedichteten Raums (CS) über die Saugleitung (40) verringert wird.

3. Verfahren zur Formung von faserverstärkten Verbundwerkstoffen nach Anspruch 1,
wobei das Abdeckelement (12A) eine innere Abdeckung (12Aa) zum Abdichten des Schaums und eine äußere Abdeckung (12Ab) zum Aufnehmen der inneren Abdeckung (12Aa) einschließt, und
bei dem Aushärteschritt (S104) ein Druck eines ersten Innenraums (IS1), der durch die innere Abdeckung (12Aa) abgedichtet ist, auf einen Druck unterhalb eines Atmosphärendrucks verringert wird, und ein Druck eines zweiten Innenraums (IS2) zwischen der inneren Abdeckung (12Aa) und der äußeren Abdeckung (12Ab) auf Atmosphärendruck gehalten wird.

4. Verfahren zur Formung von faserverstärkten Verbundwerkstoffen nach einem der Ansprüche 1 bis 3,
wobei bei dem Ausrichtungsschritt (S101) das Faserbasismaterial (FB1, FB2) in dem Formwerkzeug (20) in einem Zustand ausgerichtet wird, in dem ein Abschnitt des Kernteils (10) nicht in Kontakt mit dem Faserbasismaterial (FB1, FB2) steht.

5. Verfahren zur Formung von faserverstärkten Verbundwerkstoffen nach einem der Ansprüche 1 bis 4,
wobei der Schaum (11) aus einem elastischen Material gebildet ist, das eine offene Zelle aufweist.

6. Einrichtung zur Formung von faserverstärkten Verbundwerkstoffen, umfassend:
ein Kernteil (10) einschließend einen elastischen, langen Schaum (11) und ein Abdeckelement (12), das so konfiguriert ist, dass es den Schaum (11) abdichtet;
ein Formwerkzeug (20), in dem ein Faserbasismaterial (F1, FB2), das das Kernteil (10) in einem hohlen Teil (HP) aufnimmt, ausgerichtet wird;
ein Abdichtungselement (30), das so konfiguriert ist, dass es das Faserbasismaterial (FB1, FB2) in dem Formwerkzeug (20) abdichtet, um einen abgedichteten Raum (CS) zu bilden;
ein Saugteil (40), das so konfiguriert ist, dass es Luft in dem abgedichteten Raum (CS) absaugt, um den Druck in dem abgedichteten Raum (CS) zu verringern;
ein Harzeinspritzteil (50), das so konfiguriert ist, dass es ein thermohärtendes Harzmaterial (RM) in das Faserbasismaterial (FB1, FB2) einspritzt, das in dem abgedichteten Raum (CS) abgedichtet ist, dessen Druck durch das Saugteil (40) verringert wird; und
ein Heizteil (70), das so konfiguriert ist, dass es das thermohärtende Harzmaterial (RM), das durch das Harzeinspritzteil (50) in den abgedichteten Raum (CS) in das Faserbasismaterial (FB1, FB2) eingespritzt wird, erwärmt und härtet, dessen Druck durch das Saugteil (40) verringert wird,
wobei das Kernteil (10) ein Verbindungselement (13) einschließt, das einen durch das Abdeckelement (12) abgedichteten Innenraum (CI) mit einer Druckverringerungsquelle (310) verbindet,
**dadurch gekennzeichnet, dass**
das Harzeinspritzteil (50) ein Rohrkörper ist, der mit einer Zufuhrquelle (320) für das thermohärtende Harzmaterial (RM) verbunden ist und mit dem abgedichteten Raum (CS) kommuniziert,
das Saugteil (40) ein Rohrkörper ist, der mit einer Saugquelle (330) verbunden ist und mit dem abgedichteten Raum (CS) kommuniziert, und
die Einrichtung zur Formung von faserverstärkten Verbundwerkstoffen weiter eine Kommunikationsleitung (60) umfasst, die mit dem Innenraum (CS) kommuniziert und so konfiguriert ist, dass sie den Innenraum (CI) auf einem atmosphärischen Druck hält, wenn das thermohärtende Harzmaterial (RM) durch das Heizteil (70) erhitzt wird.

7. Einrichtung zur Formung von faserverstärkten Verbundwerkstoffen nach Anspruch 6,
wobei das Kernteil (10) ein Kommunikationsteil (14) einschließt, über das der Innenraum (CI) und der abgedichtete Raum (CS) miteinander kommunizieren.

8. Einrichtung zur Formung von faserverstärkten Verbundwerkstoffen nach Anspruch 6,
wobei das Abdeckelement (12A) eine innere Abdeckung (12Aa) zum Abdichten des Schaums (11) und eine äußere Abdeckung (12Ab) zum Aufnehmen der inneren Abdeckung (12Aa) einschließt, wobei das Abdeckelement (12A) so konfiguriert ist, dass,
wenn das thermohärtende Harzmaterial (RM) durch das Heizteil (70) erwärmt wird, ein Druck eines ersten Innenraums (CI1), der durch die innere Abdeckung (12Aa) abgedichtet wird, auf einen niedrigeren Druck als Atmosphärendruck verringert wird, und ein Druck eines zweiten Innenraums (CI2) zwischen der inneren Abdeckung (12Aa) und der äußeren Abdeckung (12Ab) auf Atmosphärendruck gehalten wird.

9. Einrichtung zur Formung von faserverstärkten Verbundwerkstoffen nach Anspruch 6 bis 8,
wobei in einem Zustand, in dem das thermohärtende Harzmaterial (RM) nicht durch das Heizteil (70) erhitzt wird, das Kernteil (10) so konfiguriert ist, dass es in dem hohlen Teil (HP) in einem Zustand aufgenommen wird, in dem ein Abschnitt des Kernteils (10) nicht mit dem Faserbasismaterial (FB1, FB2) in Kontakt steht.

10. Einrichtung zur Formung von faserverstärkten Verbundwerkstoffen nach Anspruch 6 bis 9,
wobei der Schaum (11) aus einem elastischen Material gebildet ist, das eine offene Zelle aufweist.

## Revendications

1. Procédé de mise en forme de composite renforcé par des fibres comprenant :
une étape d'alignement (S101) consistant à aligner un matériau à base de fibres (FB1, FB2) dans lequel une partie de noyau (10) incluant une mousse (11) longue élastique et un élément de couvercle (12) pour sceller la mousse (11) est reçue dans une partie creuse (HP), dans une matrice de formation (20) ;
une étape de scellement (S102) consistant à sceller le matériau à base de fibres (FB1, FB2) dans la matrice de formation (20) pour former un espace scellé (CS) ;
une étape d'injection (S103) consistant à aspirer de l'air dans l'espace scellé (CS) formé par l'étape de scellement (S102), réduire une pression de l'espace scellé (CS), et injecter un matériau de résine thermodurcissable (RM) dans le matériau à base de fibres (FB1, FB2) scellé dans l'espace scellé (CS) ;
une étape de durcissement (S104) consistant à chauffer et durcir le matériau de résine thermodurcissable (RM) injecté dans le matériau à base de fibres (FB1, FB2) par l'étape d'injection (103) ;
une étape de détachement (S105) consistant à détacher un composite renforcé par des fibres (200) incluant le matériau de résine thermodurcissable (RM) durci par l'étape de durcissement (S104) et le matériau à base de fibres (FB1, FB2), de la matrice de formation (20) ; et
une étape de retrait (S106) consistant à réduire une pression d'un espace interne (CI) scellé par l'élément de couvercle (12) de sorte que la mousse (11) se contracte, et retirer la partie de noyau (10) reçue dans la partie creuse (HP) du composite renforcé par des fibres (200)
dans lequel dans l'étape de scellement (S102), une ligne d'injection de résine (50) raccordée à une source d'alimentation (320) du matériau de résine thermodurcissable (RM) et l'espace scellé (CS) sont amenés à communiquer l'un avec l'autre, et une ligne d'aspiration (40) raccordée à une source d'aspiration (330) et l'espace scellé (CS) sont amenés à communiquer l'un avec l'autre,
dans l'étape d'injection (103), le matériau de résine thermodurcissable (RM) est injecté dans le matériau à base de fibres (FB1, FB2) par l'intermédiaire de la ligne d'injection de résine (50) par une réduction de la pression de l'espace scellé (CS) par l'intermédiaire de la ligne d'aspiration (40) ; et
**caractérisé en ce que**,
dans l'étape de durcissement (S104), l'espace interne (CI) est maintenu à une pression atmosphérique lorsque le matériau de résine thermodurcissable (RM) est chauffé.

2. Procédé de mise en forme de composite renforcé par des fibres selon la revendication 1,
dans lequel la partie de noyau (10) inclut une partie de communication (14) à travers laquelle l'espace interne (CI) et l'espace scellé (CS) communiquent l'un avec l'autre, et
dans l'étape d'injection (S103), l'air dans l'espace interne (CI) est guidé jusqu'à la ligne d'aspiration (40) par l'intermédiaire de l'espace scellé (CS) par une réduction de la pression de l'espace scellé (CS) par l'intermédiaire de la ligne d'aspiration (40).

3. Procédé de mise en forme de composite renforcé par des fibres selon la revendication 1,
dans lequel l'élément de couvercle (12A) inclut un couvercle intérieur (12Aa) pour sceller la mousse et un couvercle extérieur (12Ab) pour recevoir le couvercle intérieur (12Aa), et
dans l'étape de durcissement (S104), une pression d'un premier espace interne (IS1) scellé par le couvercle intérieur (12Aa) est réduite jusqu'à une pression inférieure à une pression atmosphérique, et une pression d'un second espace interne (IS2) entre le couvercle intérieur (12Aa) et le couvercle extérieur (12Ab) est maintenue à la pression atmosphérique.

4. Procédé de mise en forme de composite renforcé par des fibres selon l'une quelconque des revendications 1 à 3,
dans lequel dans l'étape d'alignement (S101), le matériau à base de fibres (FB1, FB2) est aligné dans la matrice de formation (20) dans un état où une portion de la partie de noyau (10) n'est pas en contact avec le matériau à base de fibres (FB1, FB2).

5. Procédé de mise en forme de composite renforcé par des fibres selon l'une quelconque des revendications 1 à 4,
dans lequel la mousse (11) est formée d'un matériau élastique présentant une cellule ouverte.

6. Appareil de formation de composite renforcé par des fibres comprenant :
une partie de noyau (10) incluant une mousse (11) longue élastique et un élément de couvercle (12) configuré pour sceller la mousse (11) ;
une matrice de formation (20) dans laquelle un matériau à base de fibres (F1, FB2) recevant la partie de noyau (10) dans une partie creuse (HP) est aligné ;
un élément de scellement (30) qui est configuré pour sceller le matériau à base de fibres (FB1, FB2) dans la matrice de formation (20) de manière à former un espace scellé (CS) ;
une partie d'aspiration (40) qui est configurée pour aspirer de l'air dans l'espace scellé (CS) de manière à réduire une pression de l'espace scellé (CS) ;
une partie d'injection de résine (50) qui est configurée pour injecter un matériau de résine thermodurcissable (RM) dans le matériau à base de fibres (FB1, FB2) scellé dans l'espace scellé (CS) dont une pression est réduite par la partie d'aspiration (40) ; et
une partie de chauffage (70) qui est configurée pour chauffer et durcir le matériau de résine thermodurcissable (RM) injecté dans le matériau à base de fibres (FB1, FB2) par la partie d'injection de résine (50) dans l'espace scellé (CS) dont une pression est réduite par la partie d'aspiration (40),
dans lequel la partie de noyau (10) inclut un élément de raccordement (13) qui raccorde un espace interne (CI) scellé par l'élément de couvercle (12) à une source de réduction de pression (310),
**caractérisé en ce que**
la partie d'injection de résine (50) est un corps de tube raccordé à une source d'alimentation (320) du matériau de résine thermodurcissable (RM) et communiquant avec l'espace scellé (CS),
la partie d'aspiration (40) est un corps de tube raccordé à une source d'aspiration (330) et communiquant avec l'espace scellé (CS), et
l'appareil de formation de composite renforcé par des fibres comprend en outre une ligne de communication (60) qui communique avec l'espace interne (CS), et est configurée pour maintenir l'espace interne (CI) à une pression atmosphérique lorsque le matériau de résine thermodurcissable (RM) est chauffé par la partie de chauffage (70).

7. Appareil de formation de composite renforcé par des fibres selon la revendication 6,
dans lequel la partie de noyau (10) inclut une partie de communication (14) à travers laquelle l'espace interne (CI) et l'espace scellé (CS) communiquent l'un avec l'autre.

8. Appareil de formation de composite renforcé par des fibres selon la revendication 6,
dans lequel l'élément de couvercle (12A) inclut un couvercle intérieur (12Aa) pour sceller la mousse (11) et un couvercle extérieur (12Ab) pour recevoir le couvercle intérieur (12Aa), dans lequel l'élément de couvercle (12A) est configuré de sorte que
lorsque le matériau de résine thermodurcissable (RM) est chauffé par la partie de chauffage (70), une pression d'un premier espace interne (CI1) scellé par le couvercle intérieur (12Aa) est réduite jusqu'à une pression inférieure à une pression atmosphérique, et une pression d'un second espace interne (CI2) entre le couvercle intérieur (12Aa) et le couvercle extérieur (12Ab) est maintenue à la pression atmosphérique.

9. Appareil de formation de composite renforcé par des fibres selon l'une quelconque des revendications 6 à 8,
dans lequel dans un état où le matériau de résine thermodurcissable (RM) n'est pas chauffé par la partie de chauffage (70), la partie de noyau (10) est configurée pour être reçue dans la partie creuse (HP) dans un état où une portion de la partie de noyau (10) n'est pas en contact avec le matériau à base de fibres (FB1, FB2).

10. Appareil de formation de composite renforcé par des fibres selon l'une quelconque des revendications 6 à 9,
dans lequel la mousse (11) est formée d'un matériau élastique présentant une cellule ouverte.
